# EUROPEAN PATENT APPLICATION

(11) **EP 1 675 343 A1**
(43) Date of publication of application: **28.06.2006**
(21) Application number: 04425948.9
(22) Date of filing: 23.12.2004
(51) Int. Cl.: H04L 29/06

(54) **Method and system to minimize the switching delay between two RTP multimedia streaming sessions**

(71) Applicant: Siemens S.p.A., 20126 Milano (IT)
(72) Inventor: Bacchi, Alessandro, 20138 Milano (IT); Cavalera, Claudio, 20059 Vimercate (MI) (IT); Vanzulli, Marco, 21053 Castellanza (VA) (IT); Zerbini, Massimo, 26100 Cremona (IT)
(74) Representative: Giustini, Delio

(57) **Abstract**

A communication system includes a pool of multimedia players (MP) in communication with a multimedia server (MS) both the players and the server operating according to the IETF RTSP protocol independently of the used transport network. A new network element called streaming switching processor (SSP) is located between the players and the video-server/video-encoders (ME) for executing the switching of the streaming contents upon a command received from the player. Alternatively, the SSP also embodies the functionality of video server and video encoders. The SSP includes at least M buffers (ch-1,ch-M) for en equal number of independent streaming contents kept always on. This architecture enables the SSP while processing the switching message to forward in parallel the switched streaming contents to the player. As a consequence, the player receives the new streaming contents in the context of the first RTSP session. The Switching Delay Time SDT is drastically reduced operating in this way because some typical delays overlap and others are contemporary to SDT. The multimedia contents can be derived from encoded real-time signals, such as satellite TV channels, or registered contents taken from archives. The player is programmed to flush the video/audio MPEG-4 frames out of its receiving buffer and fill up the emptied space with the frames of the relevant auxiliary buffer clocked faster. The further expedient to align the sending in correspondence of a Key-frame followed by a "secure" filled length prevents the artefacts on the displayed image. The switching message is sent by the player either on UDP or TCP; it includes at least the identifier of the requested channel, the buffer status inside the Player, and the sequence number of the last packets received by the Player. Alternatively, a new RTSP message is created including in its body these information fields described according to the RTSP presentation rules.

## Description

### FIELD OF THE INVENTION

The present invention relates to the field of delivering/enjoying multimedia contents through the IP network, and more in particular to a method and system to minimize the switching delay between two RTP multimedia streaming sessions. The invention is fully compliant with 3GPP and IETF standards relatively to those parts concerning RTSP/RTP/RTCP protocols, in the context of a typical multimedia streaming platform, for example the well known IMS valid in 3GPP ambit for mobile networks, or other platforms for fixed networks either terrestrial (PSTN) or wireless (WLAN, Wi-MAX, etc.). Used acronyms are listed in **APPENDIX C** while bibliographic References are given in **APPENDIX D.**

### BACKGROUND ART

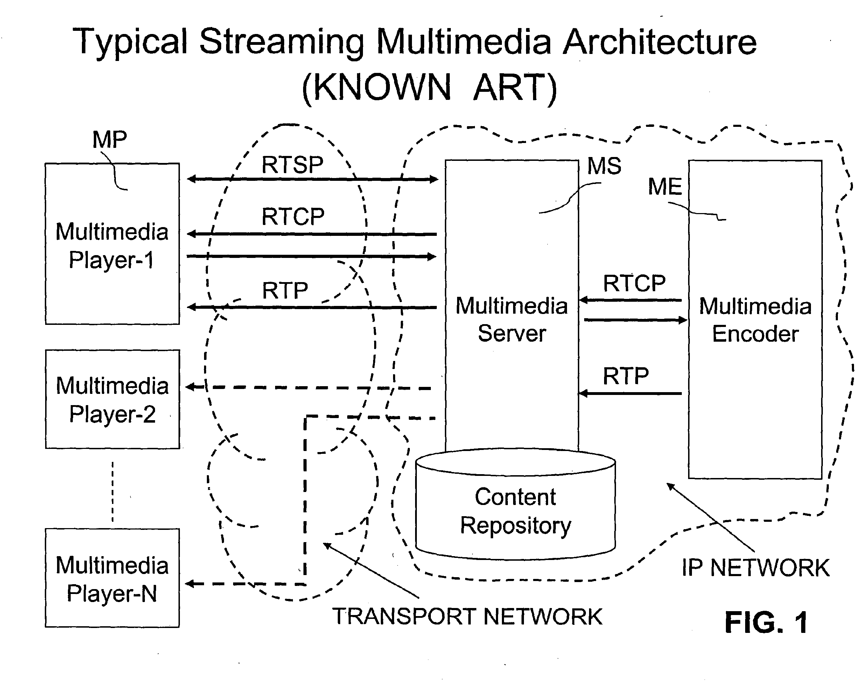

Fig.1 shows a typical system architecture for delivering, on demand, multimedia streaming contents via IP, for example: pre-encoded contents, live contents, simulated live contents. The architecture is quite general so as to represent the majority of known implementations based on the RTSP/RTP/RTCP IETF protocols, independently of the transport network used between the users and the IP providers. Bibliographic references in **Appendix D** are **[RFC2326]** for RTSP and **[RFC3550]** for RTP/RTCP.

With reference to **fig.1** we see a plurality of N multimedia players MP individually connected to a Multimedia Server MS also including a Content Repository for registered films or the like (pre-encoded contents), in its turn connected to a Multimedia Encoder ME for providing live multimedia contents such as satellite television channels. The transport network might be: wireless, wired, optical fibre, a mix of the three types, or another kind of transport compliant with IP network level. Transport networks might be different for the different connections in the architecture. Examples of the wireless type are 3G UMTS (Universal Mobile Telecommunications System) network and the player is a telephone handset, or a point-to-multipoint MAN and the player is a terminal equipment (client). Example of the wired type is the PSTN connected to the Internet Providers and accessed by the users via conventional modems or ADSL. Optical fibres are gradually replacing the copper twisted pair on the user premises offering to the multimedia streaming the advantage of a wide band.

In the operation, an user who intends to get a multimedia file shall establish a RTSP session with the IP network, in this case with the Multimedia Server, to enjoy of the RTP contents under control of RTPC. According to **[RFC2326]** the RTSP establishes and controls either a single or several time-synchronized streams of continuous media such as audio and video. The set of streams to be controlled is defined by a presentation description. Each presentation and media stream may be identified by an RTSP URL. There is no notion of an RTSP connection; instead, a server maintains a session labelled by an identifier. An RTSP session is in no way tied to a transport-level connection such as a TCP **[RFC0793]** connection. During an RTSP session, an RTSP client may open and close many reliable transport connections to the server to issue RTSP requests. Alternatively, it may use a connectionless transport protocol such as UDP **[RFC0768]** . The streams controlled by RTSP may use RTP, but the operation of RTSP does not depend on the transport mechanism used to carry continuous media.

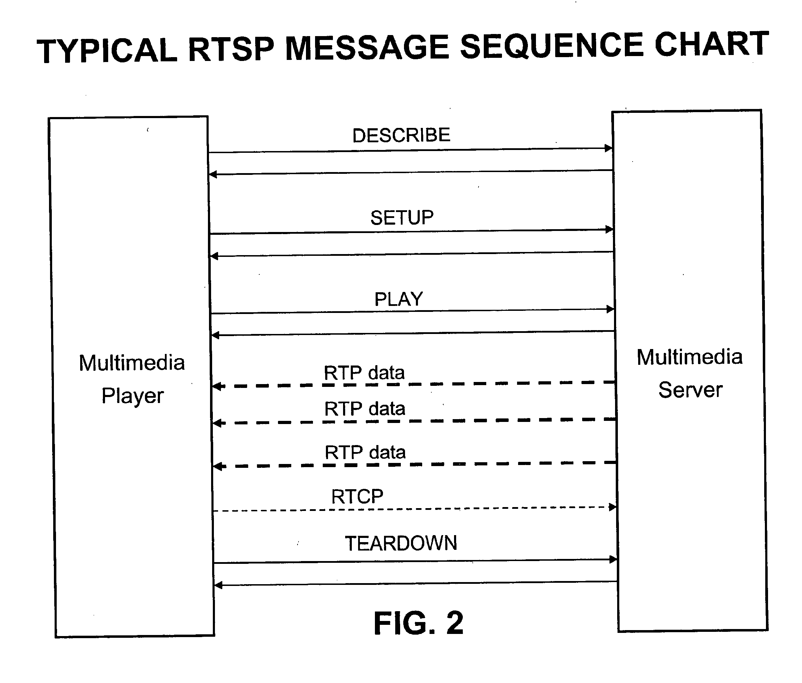

**Fig.2** shows a typical RTSP message sequence chart relevant to a multimedia streaming service session between a Media player and a Media Server. For each RTSP message sent by the Player a response follows from the Media server. With reference to **fig.2**, the following RTSP methods are indicated: SETUP, PLAY, DESCRIBE, and TEARDOWN. These methods are briefly described hereafter with the addition of other useful ones, namely: PAUSE, OPTIONS ANNOUNCE RECORD REDIRECT SET_PARAMETER.
- DESCRIBE: retrieves the low level description of a presentation or media object identified by the request URL from a server. It may use the "Accept header" to specify the description formats that the client understands. The server responds with a description of the requested resource. The Session Description Protocol (SDP) **[RFC2327]** may be used to describe streams or presentations in RTSP. The DESCRIBE reply-response pair constitutes the media initialization phase of RTSP. The DESCRIBE response must contain all media initialization information for the resource(s) that it describes. Media initialization is a requirement for any RTSP-based system, but the RTSP specification does not dictate that this must be done via the DESCRIBE method. There are three ways that an RTSP client may receive initialization information: a) via RTSP's DESCRIBE method; b) via some other protocol (HTTP, email attachment, etc.); c) via the command line or standard input. If a media client obtains a presentation description from a source other than DESCRIBE and that description contains a complete set of media initialization parameters, the client should use those parameters and not then request a description for the same media via RTSP.
- SETUP: the server allocates resources for a stream and starts an RTSP session. A client can issue a SETUP request for a stream that is already playing to change transport parameters, which a server may allow. The Transport header specifies the transport parameters acceptable to the client for data transmission; the response will contain the transport parameters selected by the server.
- PLAY: tells the server to start sending data via the mechanism specified in SETUP. A client must not issue a PLAY request until any outstanding SETUP requests have been acknowledged as successful. The PLAY request positions the normal play time to the beginning of the range specified and delivers stream data until the end of the range is reached.
- TEARDOWN: stops the stream delivery for the given URI, freeing the resources associated with it. If the URI is the presentation URI for this presentation, any RTSP session identifier associated with the session is no longer valid. Unless all transport parameters are defined by the session description, a SETUP request has to be issued before the session can be played again.

Additional methods are:
- PAUSE: causes the stream delivery to be interrupted (halted) temporarily. If the request URL names a stream, only playback and recording of that stream is halted. For example, for audio, this is equivalent to muting. If the request URL names a presentation or group of streams, delivery of all currently active streams within the presentation or group is halted. After resuming playback or recording, synchronization of the tracks must be maintained. Any server resources are kept, though servers may close the session and free resources after being paused for the duration specified with the timeout parameter of the Session header in the SETUP message.
- OPTIONS: gets available methods. An OPTIONS request may be issued at any time, e.g., if the client is about to try a non-standard request. It does not influence server state.
- ANNOUNCE: this method serves two purposes: When sent from client to server, ANNOUNCE posts the description of a presentation or media object identified by the request URL to a server. When sent from server to client, ANNOUNCE updates the session description in real-time.
- RECORD: initiates recording a range of media data according to the presentation description. The timestamp reflects start and end time (UTC). If no time range is given, use the start or end time provided in the presentation description. If the session has already started, commence recording immediately.
- REDIRECT: informs the client that it must connect to another server location. It contains the mandatory header Location, which indicates that the client should issue requests for that URL. It may contain the parameter Range, which indicates when the redirection takes effect. If the client wants to continue to send or receive media for this URI, the client MUST issue a TEARDOWN request for the current session and a SETUP for the new session at the designated host.
- SET_PARAMETER: requests to set the value of a parameter for a presentation or stream specified by the URI.

### OUTLINED TECHNICAL PROBLEMS

The drawback of all system architectures similar to the one of **fig.1** is their excessive delay between the instant the user who is enjoying a streaming content pushes on the button for switching to a new streaming content and the visualization of the new content on the player's screen. This delay is called SDT in **TABLE 1**. From the analysis of the above RTSP methods, it can be argued that this delay is intrinsically due to the RTSP because the switching of a streaming content is available only through an RTSP session closure immediately followed by the opening of a new RTSP session directed to the new RTP/RTCP flows. The opening of an RTSP session involves several protocol steps between the multimedia player and the respective server, generally through an interposed server Proxy. More precisely, the user shall get the RTSP URL of the new media stream in order to formulate its request for switching. The user request shall be subjected to authentication before receiving the authorization to accede the service. After that an SDP negotiation step between the player and the server is a general rule to setup the physical layer. Furthermore, the player shall transmit to the server some information relevant to its operating state and the status of its internal buffer. All said steps request time. Similarly, the closure of an active session requests time to reset the connection and the status of the allocated resources.

**TABLE 1 and 2** give a detailed representation of the various delays involved with the generation and switching between real-time multimedia contents. **TABLE 1** reports the description of all the delay summed up into the SDT delay. **TABLE 2** reports the description of all the delay summed up into a delay RPT, greater than SDT, corresponding to the delay between the real-time event at the input of the encoder and its visualization on player screen. From the two Tables it can be noticed the large number of sequential delays which sum up in the switching process of the prior art.

The delay SDT is as greater as the slowness of the Transport Network of **fig.1** increases. Large delays characterize a Transport Network based on mobile/wireless networks due to their complexity; in such a case the SDT delay can be about 10 seconds according to an optimistic evaluation. This value is considered excessive by the network operators who are oriented to accept delays lower than three seconds. Situations exist, typically referred to real-time events, where a low switching delay time is considered by the customers as key issue for solution choice. Considering the increasing interest of the operators to offer valued streaming services and the parallel increase of relevant business, those technical solutions in this direction should be very profitable for the proponent. Studies by external companies (multimedia platform manufacturers) are ongoing to minimize the delay due to the RTSP session closure/opening period but, unfortunately, satisfactory proposals seem not to exist since now in the Applicant's knowledge. RTSP in **[RFC2326],** Paragraph 9.1. recites: "A client that supports persistent connections or connectionless mode MAY "pipeline" its requests (i.e., send multiple requests without waiting for each response). A server MUST send its responses to those requests in the same order that the requests were received". Possible indications on the type of requests and responses and the involved practical applications are not discussed any more. In the Applicant's opinion the problem of how speed-up switching time in a real-time context, i.e. an UMTS user who intend to rapidly change the ongoing audio-video channel visualized on its player screen, remains still unresolved by the RTSP suggestion. Pipelining the requests could be useful on condition that the exact type and order of the requests are known a priori, in such a case the server may use the latency of a request to process the successive one, but whether this condition is not verified pipelining is useless. A possible scenario where the exact combination of type and order of the user requests is known a priori is when the multimedia streams can be enjoyed in parallel, but this is neither coinciding with the capabilities of the user terminals presently on the market nor with the type of services offered by the IP providers (coinciding with the network operators in case of UMTS transport network).

Another problem connected to the rapid switching between two multimedia contents is how managing the audio-video presentation during the transient for replacing the formers with the new frames. In some practical contexts a drastic compression rate is requested, e.g. the reception of a satellite television channel directly on the screen of an UMTS handset. In such a case MPEG-4 (or in general any 3GPP codecs) allows to compress digital signals from the initial wide band to a bandwidth suitable for the transport network (UMTS supports typically 384,128, 64 kbps) using differential coding/decoding. When streaming signals are transmitted, the use of buffers is well consolidated in the technique. Considering the unidirectional transmission of multimedia contents from a video server to the users, a reception buffer is always included in the user terminals while a transmission buffer is included in the video server for each transmitted stream. Bufferization allows to recovery the system latency in real-time presentations and possible differences between the transmission and reception clocks. In case of differential encoding of video signals the MPEG-4 (or 3GPP) stream includes the so-called Key-Frames (3GPP I-Frames) opportunely spaced to each other and used by the decoder to obtain the whole frame in any case. Starting from a key-frame the decoder obtains the successive frames from the encoded differences only, so that the reception buffer inside the player shall at least contain all frames between two key-frames, included. The buffer length shall be further increased to face some hardware limitations. Proportional to the buffer length is the Player Buffering delay PB (see **TABLE 1**) spent to empty out from the reception buffer the actual frames and fill up it with the frames of the new channel. Whether not opportunely minimised, the PB delay corresponds to the whole buffer length. During the transient time, whether non otherwise provided, the user perceives some artefacts due to the differential encoding.

### OBJECTS OF THE INVENTION

The main object of the present invention is that to indicate the way to reduce the switching time between multimedia contents (expecially the SDT time) provided through the IP network and in particular through a multimedia server running the RTSP/RTP/RTCP protocol. Users shall be enabled to receive the service upon an explicit request performed by press a button on its terminal, or some equivalent actions, independently of the fact that the transmitted stream is taken by the server from a stored content or is directly decoded and re-encoded from real-time received signal (live-contents). Users shall not be tied to a particular strategy to reduce the switching time in the sense that the requests are intended absolutely random in time and random among the pool of the subscribed contents.

Another object of the invention is that to indicate how executing the fast switching between multimedia contents in seamless mode for the player.

### SUMMARY AND ADVANTAGES OF THE INVENTION

The invention achieves said object by providing a method for switching between streaming sessions based on the RTSP Internet protocol for delivering real-time multimedia contents according to the RTP/RTCP protocols to a player terminal upon a switch request message sent by the player, as disclosed in claim 1.

According to the method of the invention the player, which is engaged with a first RTSP session for enjoying first multimedia streaming contents, triggers for changing the received streaming contents by sending a switching request message to a multimedia RTSP server; the latter switches to the new streaming contents selected among M multimedia independent ones kept always on and, while is processing the switching message, forwards in parallel the switched streaming contents to the player. Processing the switching message from the RTSP server shall be intended as reading the switching message information content and using it to close the first RTSP session and open the second one. A list of M possible contents is exchanged between the player and the system, and the list is kept up-to-date periodically, or on the base of requests and/or notifications. As a consequence of the switching as stated above, the player receives the new streaming contents in the context of the first RTSP session. The Switching Delay Time SDT is drastically reduced operating in this way because some typical delays overlap and others are contemporary to SDT. The multimedia contents are encoded real-time signals, such as satellite TV channels, or registered contents taken from archives.

Advantageously, the M multimedia contents fill up respective auxiliary buffer at the server side. This allows to minimize the SDT delay if the player is programmed to flush the video/audio MPEG-4 frames out of its receiving buffer and fill up the emptied space with the frames of the relevant auxiliary buffer clocked faster. The further expedient to align the sending in correspondence of a Key-frame followed by a "secure" filled length prevents the artefacts on the displayed image.

The method is executable according to three different embodiments named: "Double switch", "Single switch", and "Single switching between only auxiliary streams". In the "Double switch" embodiment the switching to a second RTSP session takes place through an auxiliary fictitious section for delivering the switched contents immediately after the server receives the switching request message. In the "Single switch" embodiment the server, which is engaged with the first RTSP session, switches to an auxiliary fictitious section for delivering the switched contents immediately after receiving the switching request message, and remains in the auxiliary section without closing the first session and opening a second one. The third embodiment differs from the second one by the only fact that the server switches to the second streaming contents starting from an auxiliary session for delivering the first streaming content.

Other object of the invention is a communication system operating according to the method of the invention, as disclosed in the independent system claim.

The system of the invention puts into communication one or more players with a RTSP server independently of the used transport network. At least two equivalent embodiments are foreseen, both of them including a streaming switching processor for executing the switching upon a command received from the player. This processor includes at least M buffers for an equal number of independent streaming contents. According to a first embodiment, the streaming switching processor is located between the players and the video-server/video-encoders. According to a second embodiment, the streaming switching processor also embodies the functionality of video server and video encoders.

### BRIEF DESCRIPTION OF THE DRAWINGS

The features of the present invention which are considered to be novel are set forth with particularity in the appended claims. The invention and its advantages may be understood with reference to the following detailed description of some embodiments thereof taken in conjunction with the accompanying drawings given for purely non-limiting explanatory purposes and wherein:
- **fig.1,** already described, shows a typical system architecture for delivering multimedia contents via IP according to the prior art;
- **fig.2,** already described, shows a typical RTSP message sequence chart relevant to a multimedia streaming service session established in the system of fig.1;
- **figures 3a, 3b,** and **3c** show some architectures for delivering multimedia contents via IP according to the present invention;
- **fig.4** shows the component parts of a SSP (Streaming Switching Processor) block visible in the architectures of fig.3a, 3b, and 3c;
- **fig.5** shows the component parts of an Auxiliary Advanced Buffers block visible in the SSP block of fig.4;
- **fig.6** shows the component parts of a Live Content Buffer block visible in fig.5;
- **fig.7** shows the component parts of a Streaming Switching Processor Core visible in the SSP block of fig.4;
- **figures 8** to **10** indicate some alternative ways to switch between multimedia streams;
- **figures 11** to **14** visualize the sequence of operational steps carried out by means of the architectures of fig.3a, 3b, and 3c for switching from a current multimedia session to another multimedia session;
- **figures 15** to **19** visualize the dynamic status of two buffers located in the Player and the SSP block, respectively, during the switching of multimedia contents according to the sequence of operational steps visualized in the figures 11 to 13;
- **fig.20** provides a visual support to the time spent in the various steps of the multimedia streaming switching method implemented by the architectures of fig.3a, 3b, and 3c.

### DETAILED DESCRIPTION OF SOME EMBODIMENTS OF THE INVENTION

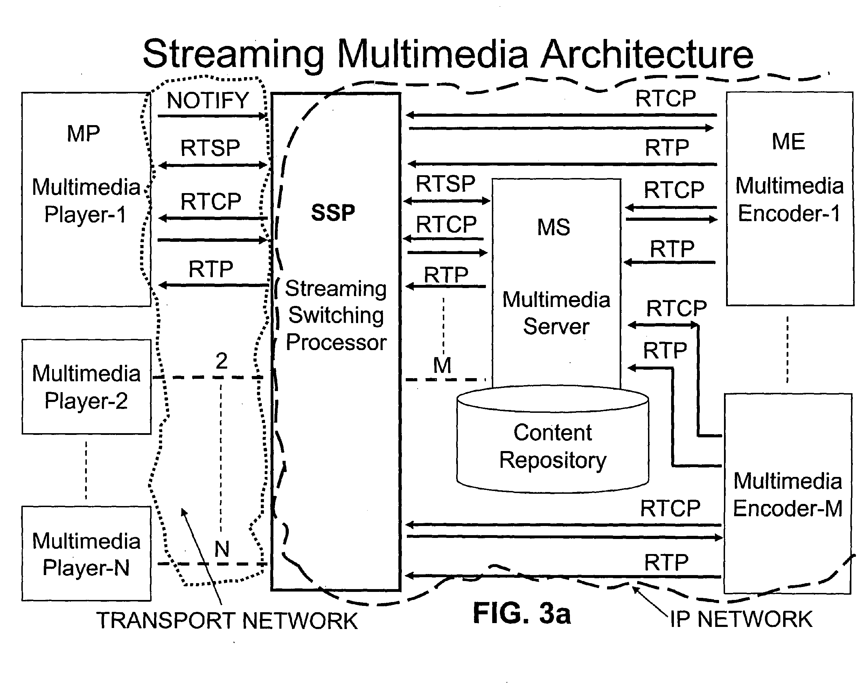

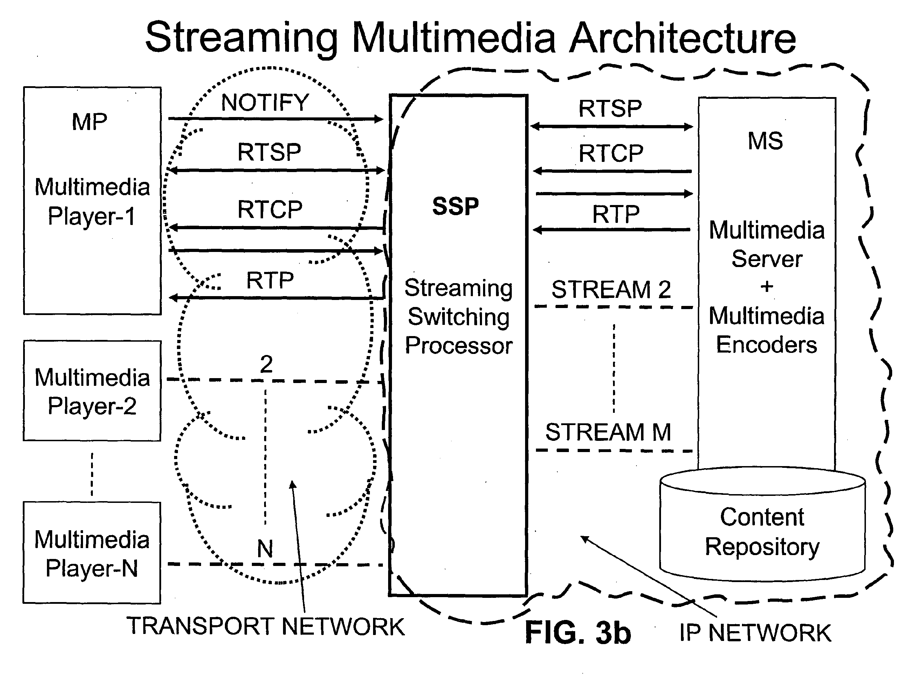

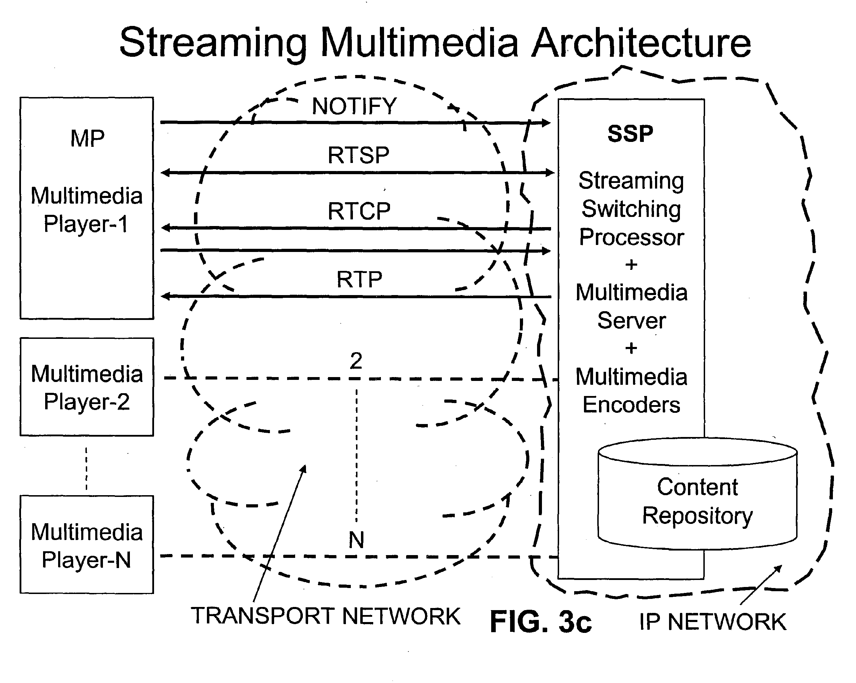

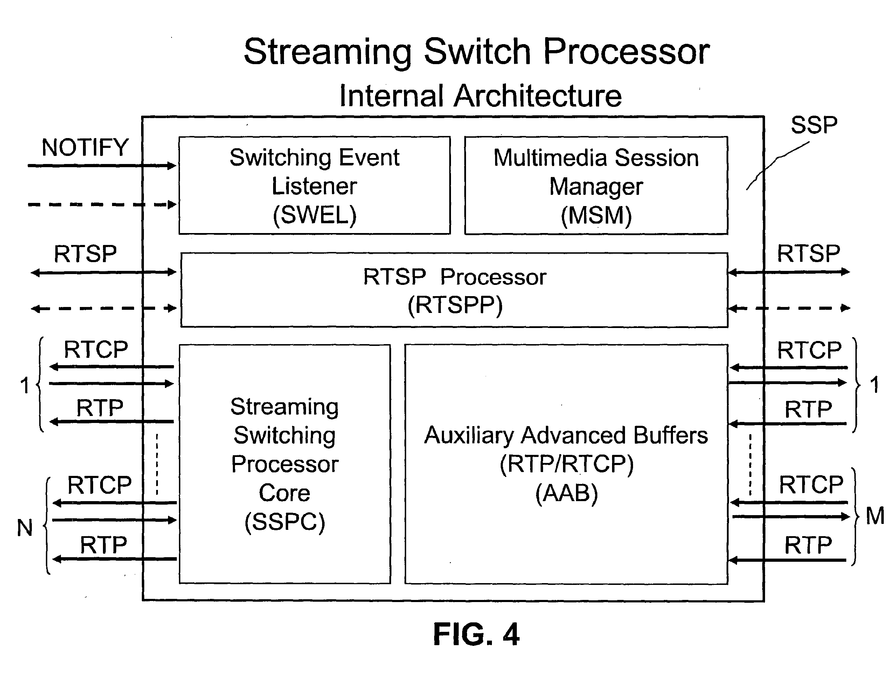

With reference to **fig.3a** we see the architecture of a system that, differently from the system of **fig.1**, includes a new network element called Streaming Switching Processor (SSP) placed between the Multimedia Server MS and the pool of N Multimedia Players MP. The SSP element is connected to the user players through a Transport Network which provides individual connections between the SSP and each player. On the connections the RTSP/RTP/RTPC protocols are running and a NOTIFY message is forwarded to SSP by each player. The SSP elements in its turn is connected to the Multimedia Server through other RTSP/RTP/RTPC connections, and to each of the M Multimedia Encoder through individual RTP/RTPC connections. The duplication of the RTP/RTPC streams at the output of the Multimedia Encoders ME is appositely studied to render the actual Multimedia Server (Video Server) MS compatible with the introduction of the SSP element in the system. Duplication might be executed by multicast. As will be detailed later on, the SSP element provides the "fast content switch" functionality to the multimedia system, by minimizing the delay time for content stream switching on client request. In **fig.3b** a variant of the previous figure is illustrated in which the Multimedia Server MS also includes the Multimedia Encoders ME. Further simplification can be achieved as indicated in fig.3c where a single Network Element carries out the role of Multimedia Encoder, Multimedia Server, and SSP processor. The operation will be illustrated after having described in detail the SSP element in the successive **figures 4 to 7**.

**Fig.4** schematizes the internal architecture of the SSP element. With reference to the figure, the SSP block is subdivided in the following main logical parts: Switching Event Listener SWEL, Multimedia Session Manager MSM, RTSP Processor RTSPP, Streaming Switching Processor Core SSPC, and Auxiliary Advanced Buffers (RTP/RTCP) AAB. For the sake of simplicity the connection of these blocks to the bus of the RTSP Processor is not represented in figure. Conceptually, the Auxiliary Advanced Buffers AAB are not mandatory whether there is not need to find the K-Frames. As the external connections are concerned:
- the NOTIFY messages from the N Players reaches the Switching Event Listener SWEL;
- the RTSP messages to/from the N Players engage N ports of the RTSP Processor RTSPP at the Player side;
- the RTSP messages to/from the M Multimedia Encoders engage M ports of the RTSP Processor RTSPP;
- the RTP/ RTCP streams at the output of the Streaming Switching Processor Core SSPC are directed to the N Players;
- the RTP/ RTCP streams at the output of the M Multimedia Encoders are directed to the Auxiliary Advanced Buffers AAB.

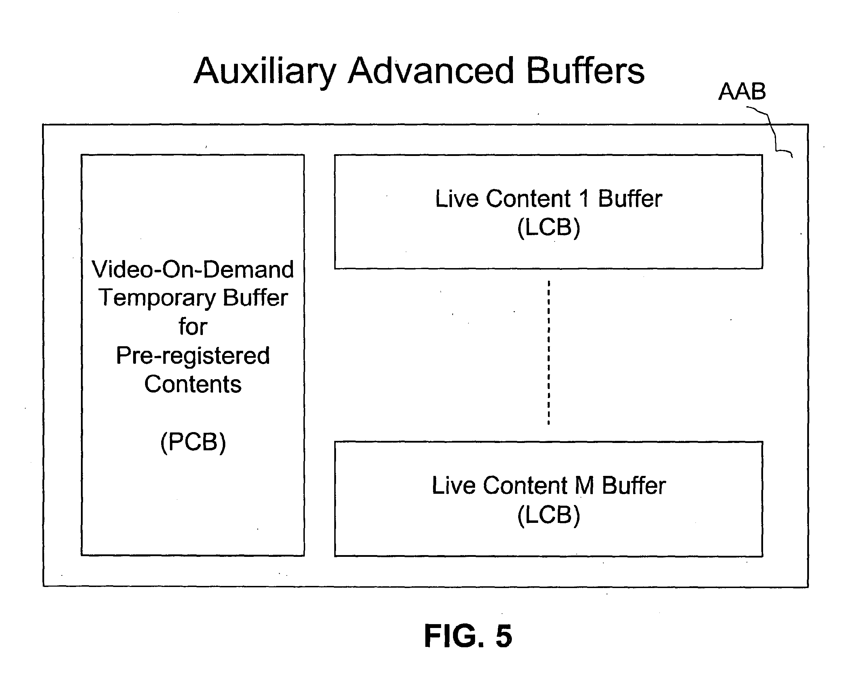

**Fig.5** schematizes the internal architecture of the Auxiliary Advanced Buffers AAB of fig.4. With reference to the figure, the represented block includes:
- Video-on-Demand Temporary buffer PCB for pre-register multimedia contents taken from the Content Repository (fig.3a) and sent to the requesting Players;
- Live Content Buffers LCB in number of M for the encoded real-time streams.

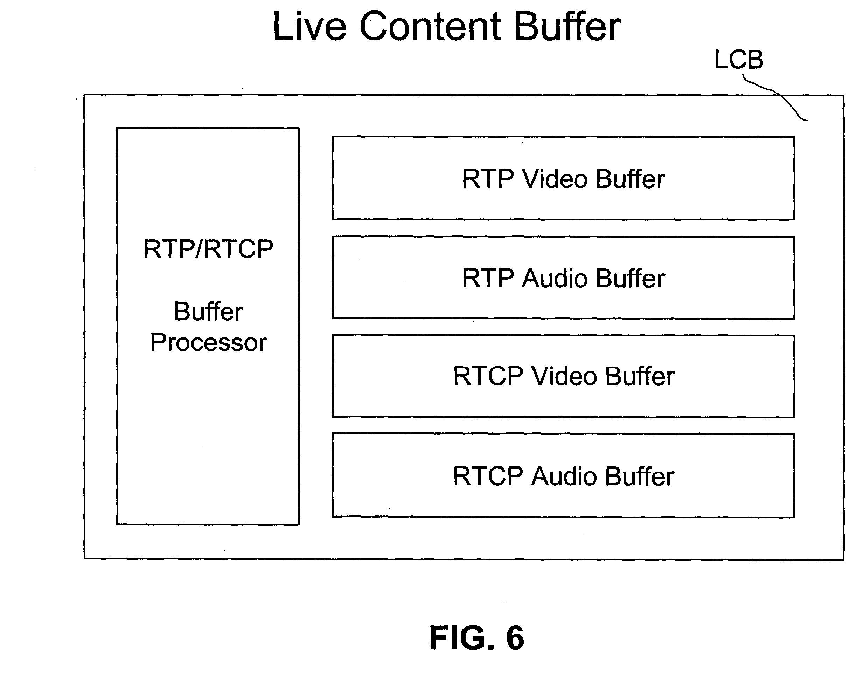

**Fig.6** schematizes the internal architecture of the Live Content Buffer LCB of fig.5. With reference to the figure, the represented block includes:
- RTP/RTCP Buffer Processor;
- RTP Video Buffer;
- RTP Audio Buffer;
- RTCP Video Buffer;
- TRCP Audio Buffer.

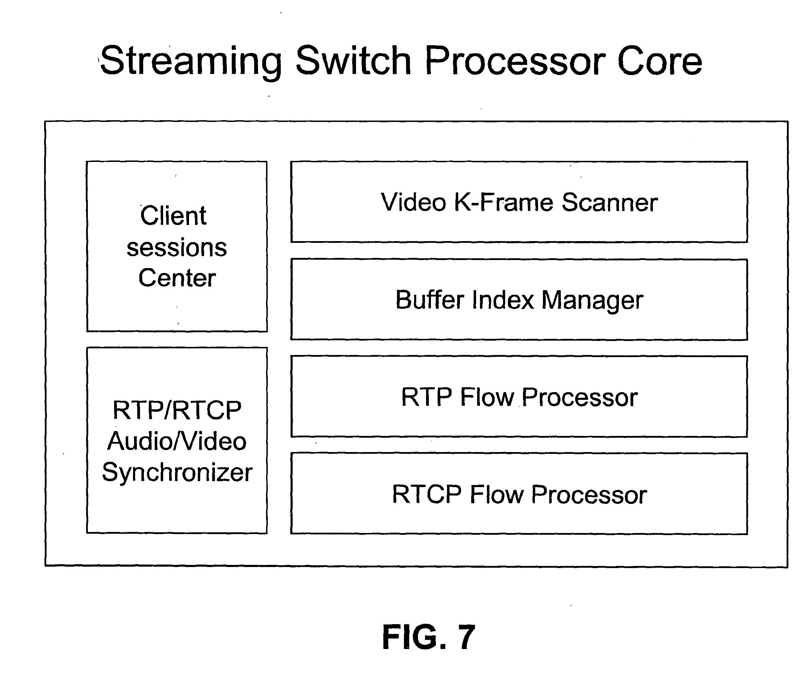

**Fig.7** schematizes the internal architecture of the Streaming Switching Processor Core SSPC of fig.4. With reference to the figure, the represented block includes:
- Client Session Centre;
- RTP/RTCP Audio/Video Synchronizer;
- Video Key-Frame Scanner;
- Buffer Index Manager;
- RTP Flow Processor;
- RTCP Flow Processor.

The operation of the system represented in the preceding figures is now discussed relatively to three variants on the operation of the SSP processor. With reference to fig.4, the SSP processor works on the base of the auxiliary RTP/RTCP buffers concept. One buffer corresponds to one multimedia content, and can be used to deliver packets to several clients. The multimedia contents are subjected to the same coding rules and format, e.g. MPEG-4. All RTP/RTCP packets related to multimedia contents are previously buffered in the specific Auxiliary Advanced Buffer AAB in order to be delivered to the Player MP. Delivering is carried out on client switching request directed to the Switch Event Listener SWEL which supplies the Streaming Switch Processor Core SSPC with the indication of the new multimedia stream to be switched. The SSPC commands the Auxiliary Advanced Buffer AAB to select the desired one out of M buffers which forwards its contents to the requesting Player MP before completing the (possible) closure and reopening of a multimedia session on the Multimedia Server MS, reducing in this way the SDT delay. In case of live (or simulated live) multimedia streaming contents, the auxiliary buffers are continuously fed by the multimedia-server/multimedia-encoder. In case of static content the Video-On-demand Temporary Buffer (**fig.5**) is fed on the base of client request. The SSPC forwards, after processing RTP/RTCP, the packets to the Player (RTSP client), starting from the point of the buffer that optimizes contemporary delay time (minimising it) and user experience (maximising it): in fact, the first available video K-Frame (and the correspondent audio part) is selected as the first part of the content to be sent after the switching, in order to provide to the user the best video perception (non artefacts during the switching).

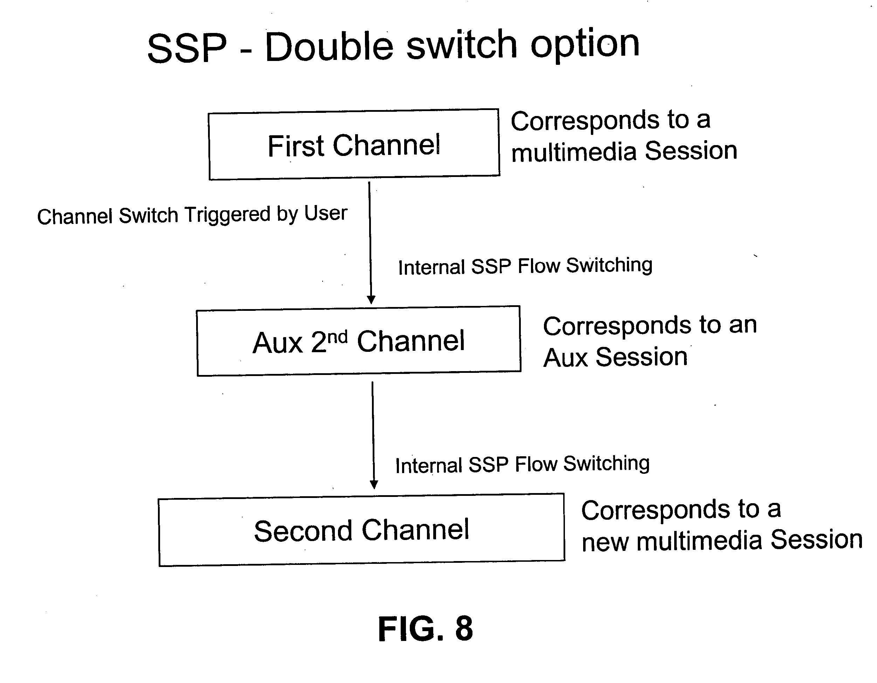

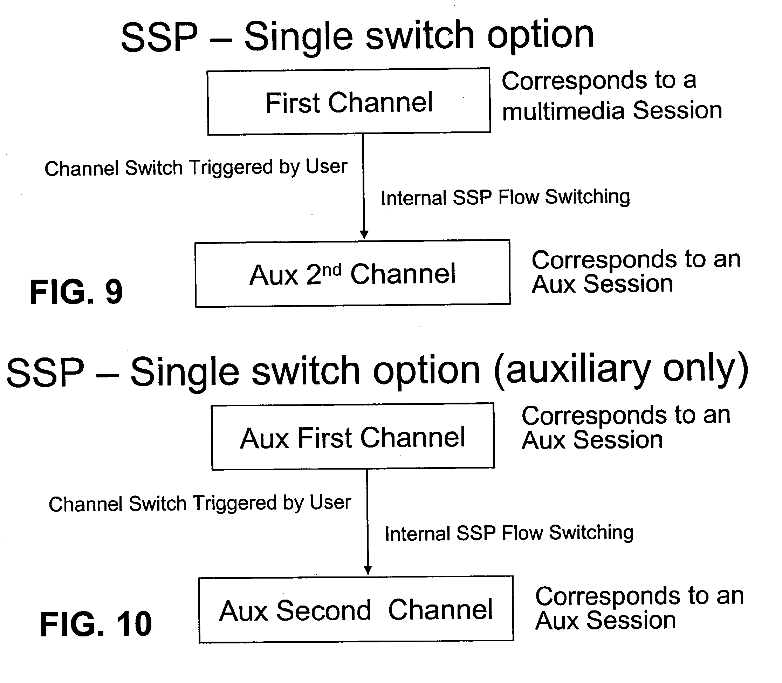

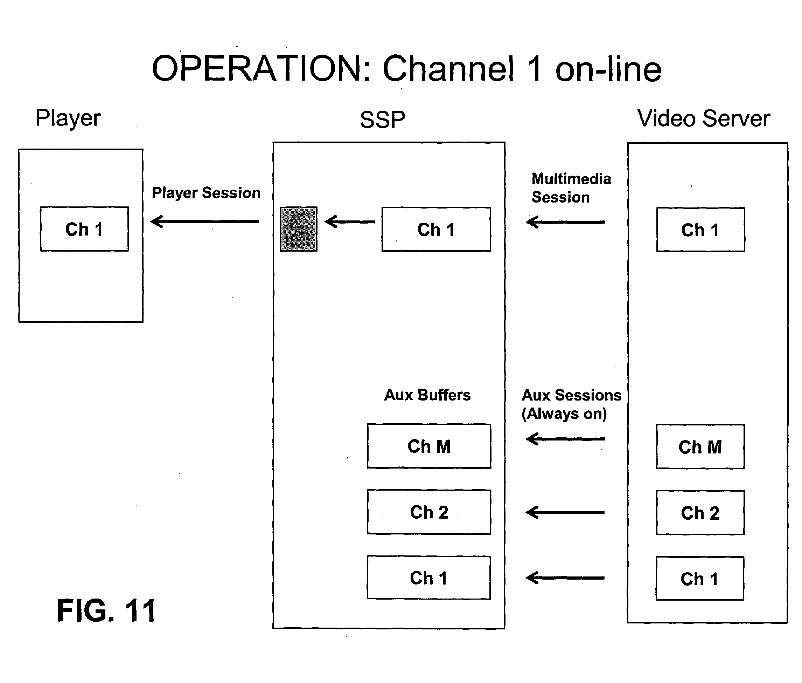

**Figures 8, 9**, and **10** schematize the following three alternative modality of operation of the SSP processor, corresponding to an equal number of embodiments of the invention: "Double switch" (**fig.8**), "Single switch" (**fig.9**), "Single switching between only auxiliary streams" (**fig.10**). With reference to **fig.8**, in the "Double switch" embodiment the Player who is watching a first channel relative to a first multimedia session, switches to a second channel relative to a second multimedia session passing for an intermediary switching to an auxiliary second channel in the SSP element. Note that the auxiliary and second sessions represent the same "channel" (e.g. both deliver MTV to the user). The intermediary switching to the auxiliary second channel corresponds to an auxiliary multimedia session always on. With reference to **fig.9**, in the "Single switch" embodiment the Player who is watching a first channel relative to a first multimedia session, switches to an auxiliary second channel corresponding to an auxiliary multimedia session always on, and remains. With reference to **fig.10**, in the "Single switching between only auxiliary streams", the Player who is watching a first auxiliary channel switches to a second auxiliary channel always on, and remains. The three embodiments are better detailed starting from the first one (**fig.8**) whose operational steps are illustrated with the support of **figures 11** to **14.**

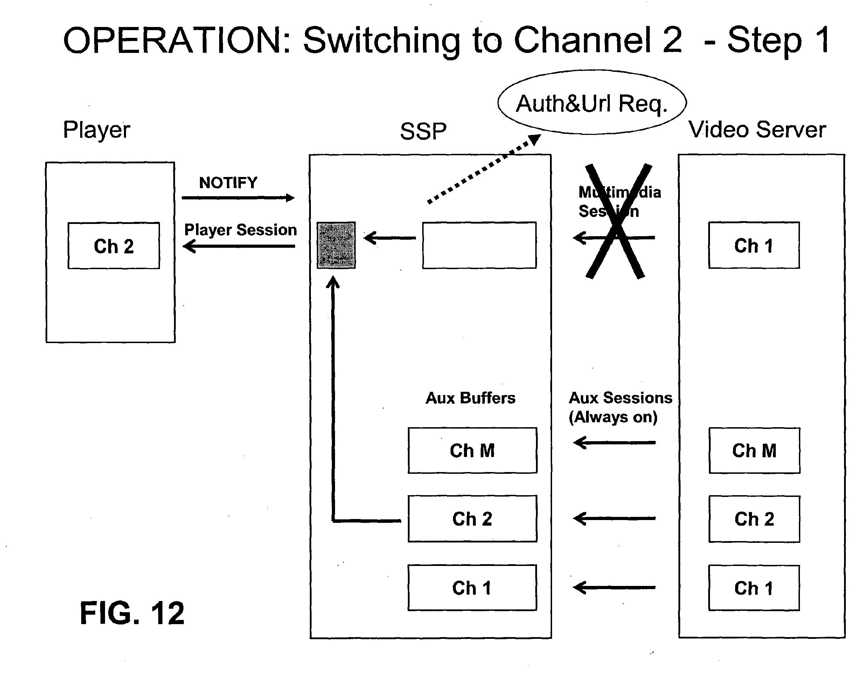

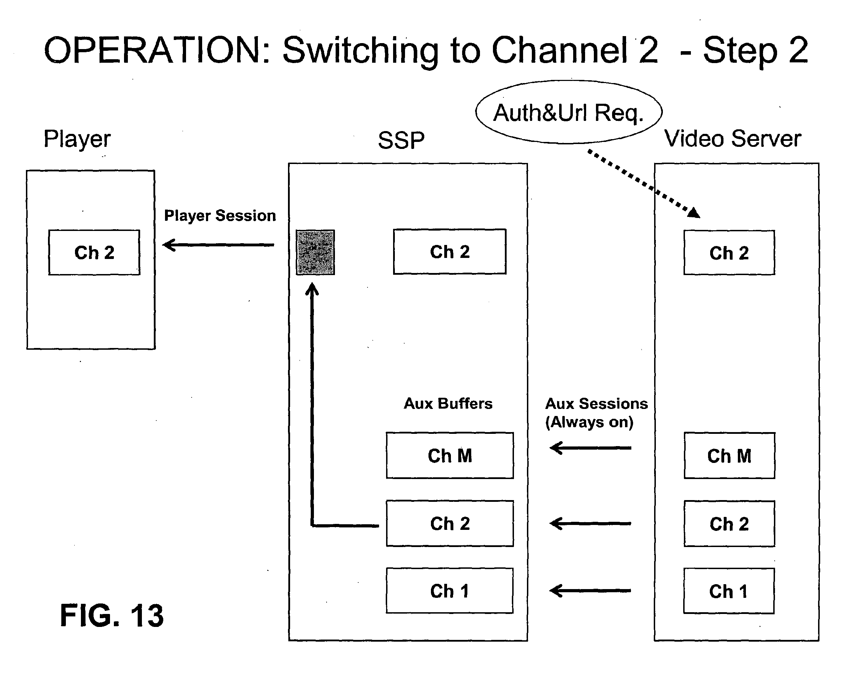

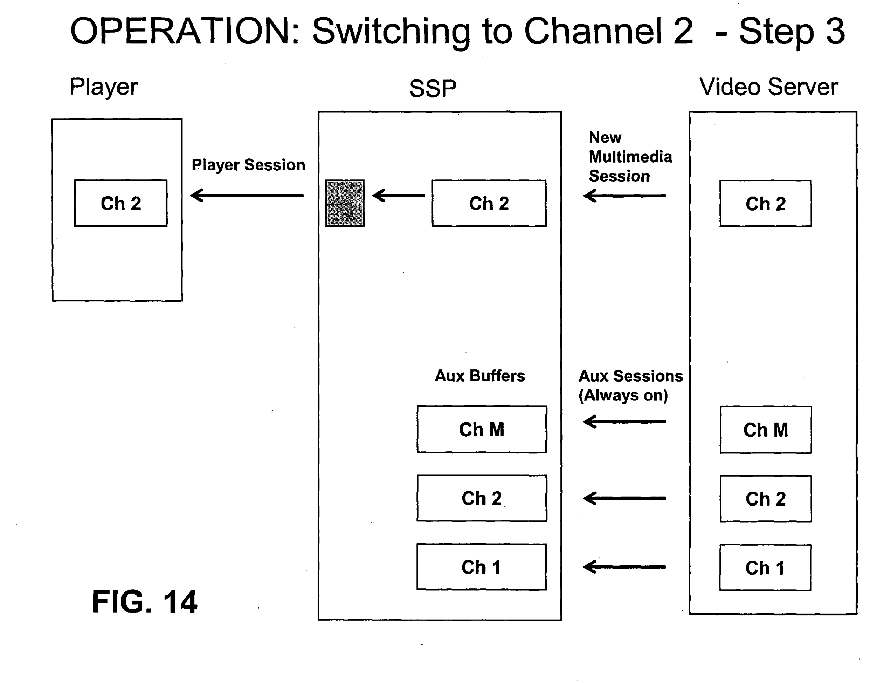

**Fig.11** shows the initial condition valid for either the "Double switch" **(fig.8)** or the "Single switch" **(fig.9)** embodiments. With reference to **fig.11,** M+1 buffers internal to the SSP processor, M+1 buffers internal to the Video Server, and a single buffer internal to the Player are represented. The M buffers are filled up with the streaming contents of M channels, while the remaining buffer is filled up with the content of Channel 1. The operational steps carried out in the system to outcome the situation of **fig.12** are the following:
1. SSP intercepts the first multimedia RTSP session request from the Player (RTSP client).
2. SSP forwards the first RTSP request to the Video Server.
3. SSP forwards to the Player the RTP/RTCP packets of the Channel 1 coming from the auxiliary buffer on the SSP, processing them if necessary, and the Player receives the Ch 1 content.
4. SSP receives the "NOTIFY" message to switch from Ch 1 to the Ch 2 content.
5. SSP sends the Ch 2 content to the Player using packets coming from auxiliary buffer. This corresponds to a First Switching to Ch 2 and the Player receives the new content.
6. SSP contemporary executes all actions needed to close the previous multimedia session on the server while the client continues to receive the Ch 2 content.
   The operational steps carried out in the system to outcome the situation of fig.13 are the following:
7. SSP executes all actions needed to open a new multimedia session on the server (Authorization, charging, etc...) while the client continues to receive the Ch 2 content.
   The operational steps carried out in the system to outcome the situation of **fig.14** are the following:
8. The new multimedia session has been completed on the video Server and the SSP sends the Ch 2 content to the Player using packets coming from the new multimedia session on the server. This corresponds to a Second Switch to channel 2 while the Player continues to receive the Ch 2 content.

Although recommended for an optimal design, as said before, the use of auxiliary buffers is not mandatory whether there is not need to find the K-Frames and the transmission and reception clocks are perfectly synchronized. In such a case a multiplexer inside the SSP processor, controlled by a digital code derived from the indication on the switched channel (Ch 2) included in the NOTIFY message, is used to select the channel to be forwarded to the Player.

Starting from the initial condition represented in fig.11, the operational steps carried out in the system in correspondence of the "Single switch" embodiment (fig.9) are the following:
1. SSP intercepts the first multimedia RTSP session request.
2. SSP forwards the first RTSP request to the Video Server.
3. SSP forwards to the client the RTP/RTCP packets of the Channel 1 coming from the auxiliary buffer on the SSP (processing them if necessary) and the Player receives the Channel 1 content.
4. SSP receives the "NOTIFY" message to switch from Channel 1 to Channel 2 content.
5. SSP sends the Channel 2 content to the Player using packets coming from auxiliary buffer. This corresponds to a Switching to Channel 2 and the Player receives the new content.
6. SSP contemporary executes all actions needed to close the previous multimedia session on the server while the client continues to receive the Channel 2 content.
7. SSP executes all actions needed to open a new multimedia session on the server (Authorization, charging, etc...) while the client continues to receive the Channel 2 content.
8. SSP continues to send the Channel 2 content to the Player using packets coming from the auxiliary buffer (no second switching needed) and the client continues to receive the Channel 2 content.

Starting from an initial condition different from the one represented in **fig.11** by the fact that the receiving buffer internal to the Player is filled up with the auxiliary Channel 1 content, the operational steps carried out in the system in correspondence of the "Single switching between only auxiliary streams" embodiment (**fig.10**) are the same of the sequence of steps described for the "Single switch" embodiment of **fig.9**.

The NOTIFY message processed by SSP to switch the channel is generated by the PLAYER and sent either on UDP or TCP. The NOTIFY message shall include, at least:
- the IP address of the requesting Player;
- the identifier of the actual channel running on the Player;
- the identifier of the requested channel;
- a switching command;
- the buffer status inside the Player;
- the sequence number of the last packets received by the Player, etc.

An alternative to the NOTIFY message is that to include the request from the Player to switch the actual channel directly in the RTSP signalling. In this case a new RTSP message is created including in its body the aforementioned information fields opportunely described according to the RTSP presentation rules. This opportunity is admitted in the RTSP protocol.

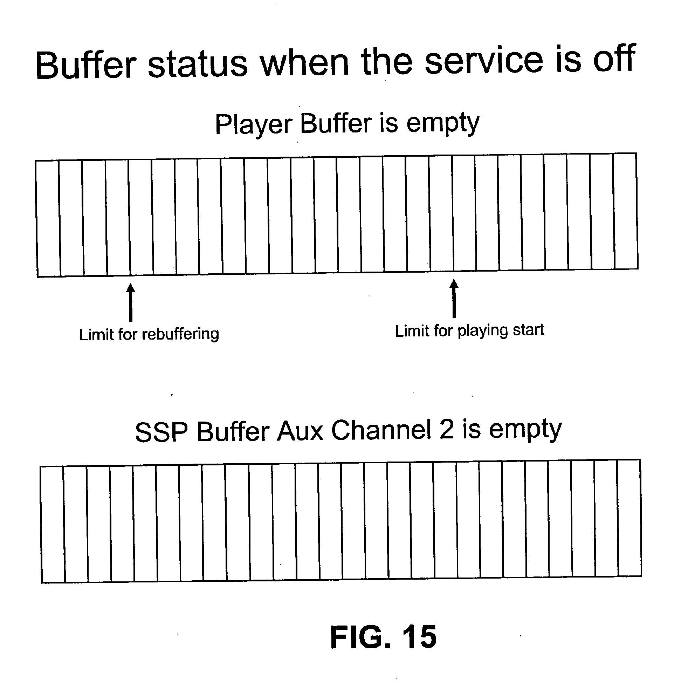

The successive **figures 15** to **19** illustrate the steps of a procedure for an advanced use of the RTP/RTCP video/audio auxiliary buffers. In each figure the status of the buffer internal to the Player relevant to the actual channel (Ch 1) is put in comparison with the status of the auxiliary buffer internal to SSP relevant to the switched channel (Ch 2) during the completion of the first switching according to the three embodiments of the invention relative to the **figures 8** to **10.** For the sake of completeness **fig.15** shows the empty status of the buffers when the service is off.

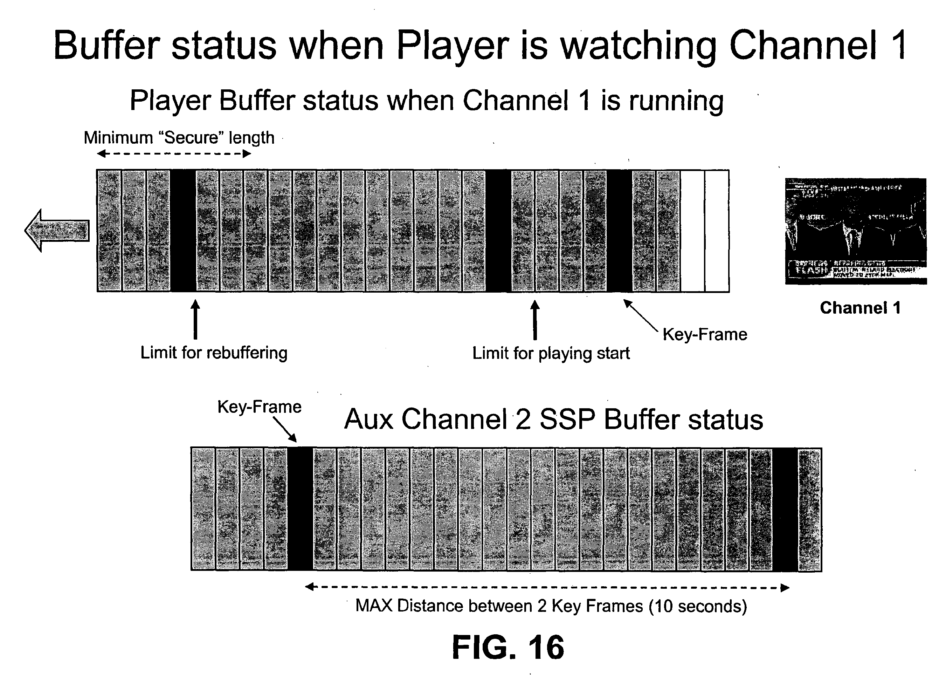

In **fig.16** the status of the two buffers is shown when the player is watching the channel 1. With reference to **fig.16** it can be noticed that the Player buffer is almost completely filled up beyond the limit for playing start, and three Key-Frames are included. The picture of channel 1 that is visible on the player screen is depicted on the right. The auxiliary buffer relevant to channel 2 is full and at least two Key-Frames spaced 10 seconds apart are included. The auxiliary buffers 1 to M are always kept completely filled up by the SSP processor; this strategy allows for a rapid and absolutely random switching between the actually played channel an the remaining M-1 multimedia contents.

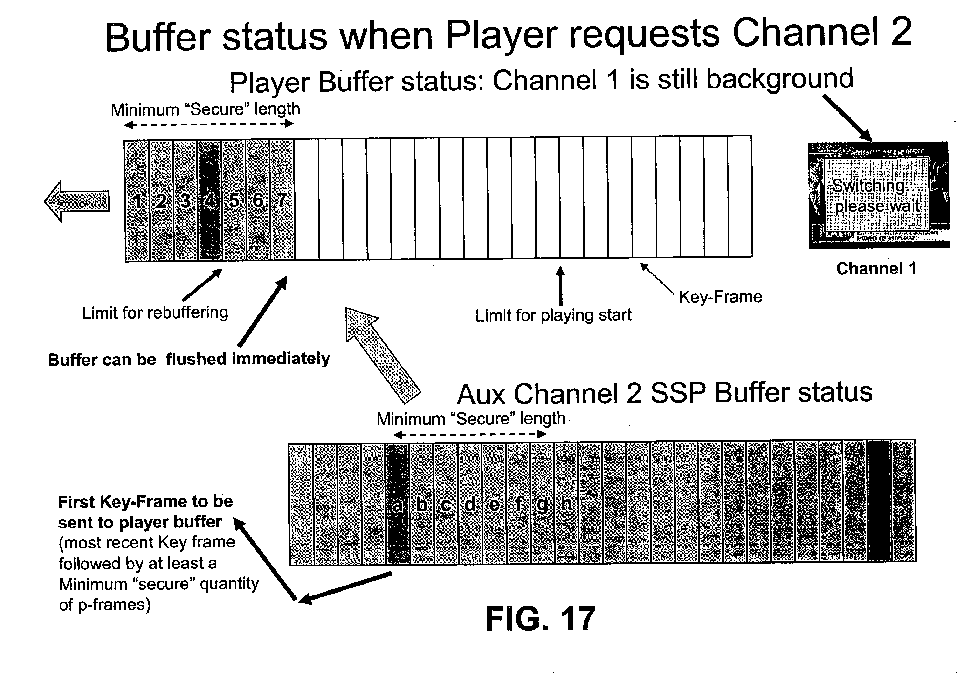

In **fig.17** the status of the two buffers is shown when the user decides to switch the content. With reference to **fig.17** it can be noticed that the video frames stored in the Player buffer beyond a minimum size (7 frames) called "Limit for rebuffering" have been flushed out. Flushing contributes to minimize the total switching delay although it is not mandatory. If the Player buffer is dimensioned correctly (less than 3 seconds) the fast switching is possible event without flushing it. The auxiliary buffer of channel 2, being full, surely contains a Key-Frame followed by a minimum "secure" number of frames (a,......,h) greater than the "Limit for rebuffering". When the user decides to switch the content, the player flushes its receiving buffer (audio/video) until a minimum size, then sends the NOTIFY message to SSP using the opportunities listed above. In order to further minimising the switching delay, UDP protocol could be used to send the NOTIFY message so as to avoid the TCP handshaking. Channel 1 is still background on the Player screen but, optionally, a courtesy message is displayed.

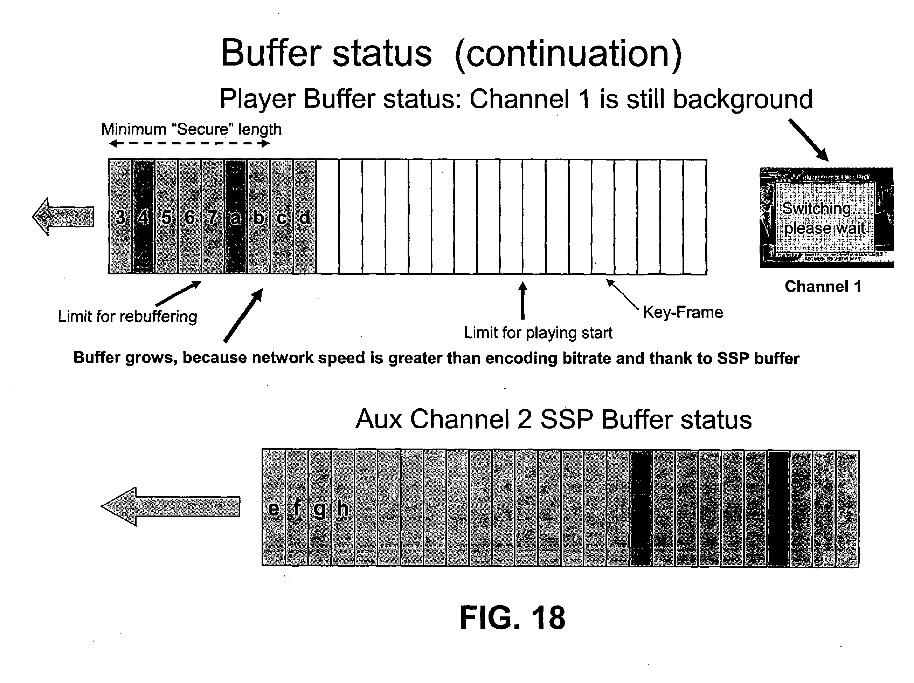

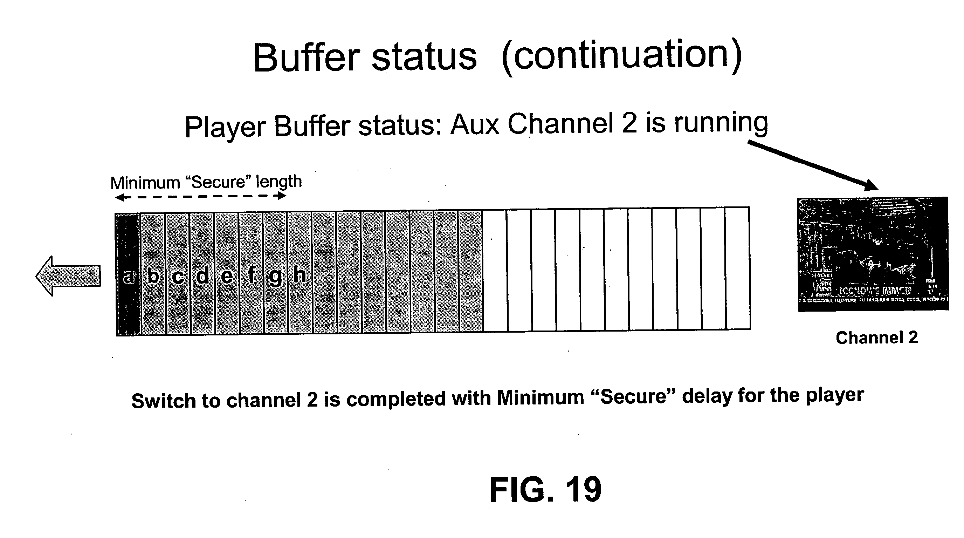

With reference to **fig.18**, the SSP receives the NOTIFY message and forwards the output content from the auxiliary buffer of Channel 2 to the requesting Player, starting with a Key-Frame (a). The transfer of SSP bufferized packets to the player buffer is faster than the encoding speed, in order to fill the player buffer quickly. Channel 1 is still background on the Player screen and the courtesy message is displayed. With reference to **fig.19,** switching to channel 2 is completed with the minimum "secure" delay for the Player and channel 2 is displayed on the screen. This behaviour is the same for all the embodiments considered above.

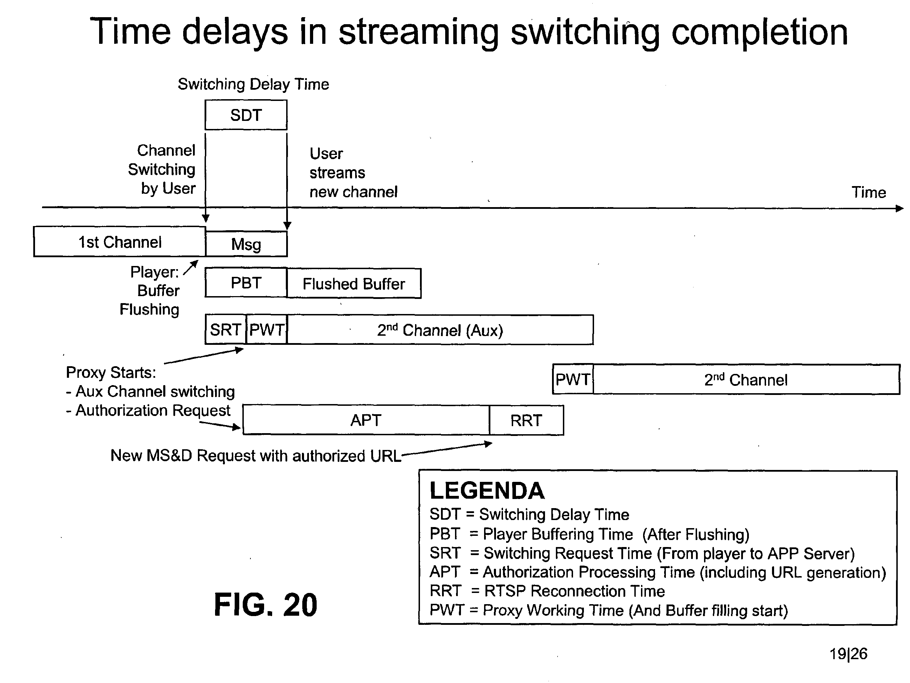

The delay analysis relevant to the operational steps of the streaming switching method represented in **figures 11** to **14** is performed with the help of **fig.20** plus **TABLE 3** and **TABLE 4** of the **APPENDIX B**. With reference to **fig.20** and **TABLE 3** it can be noticed that the proposed invention really minimises the Switching Delay Time SDT. In fact some delays (marked with *) do not have any impact on SDT, while other delays (marked with *) are contemporary to PBT (PBT>SRT+PWT).

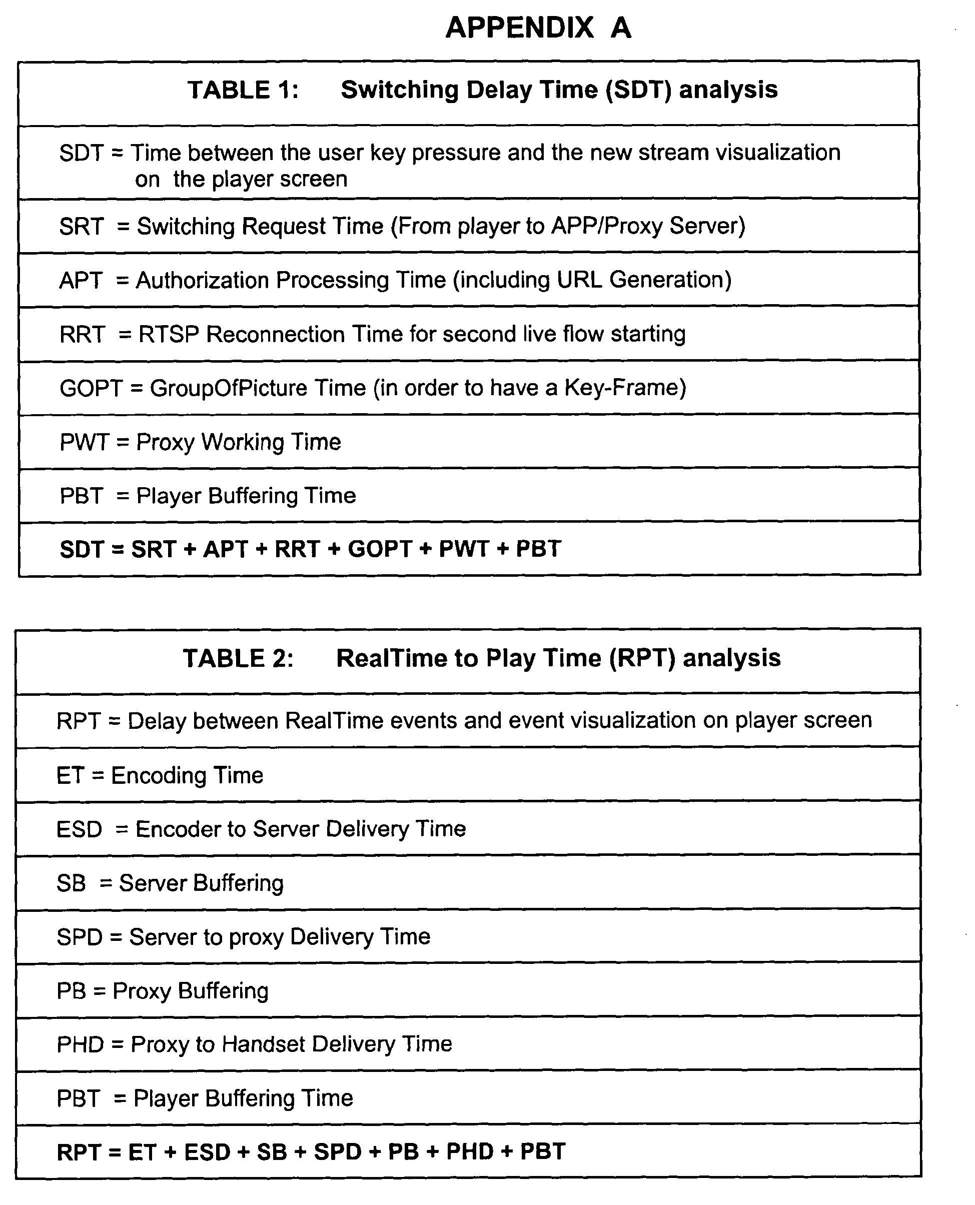

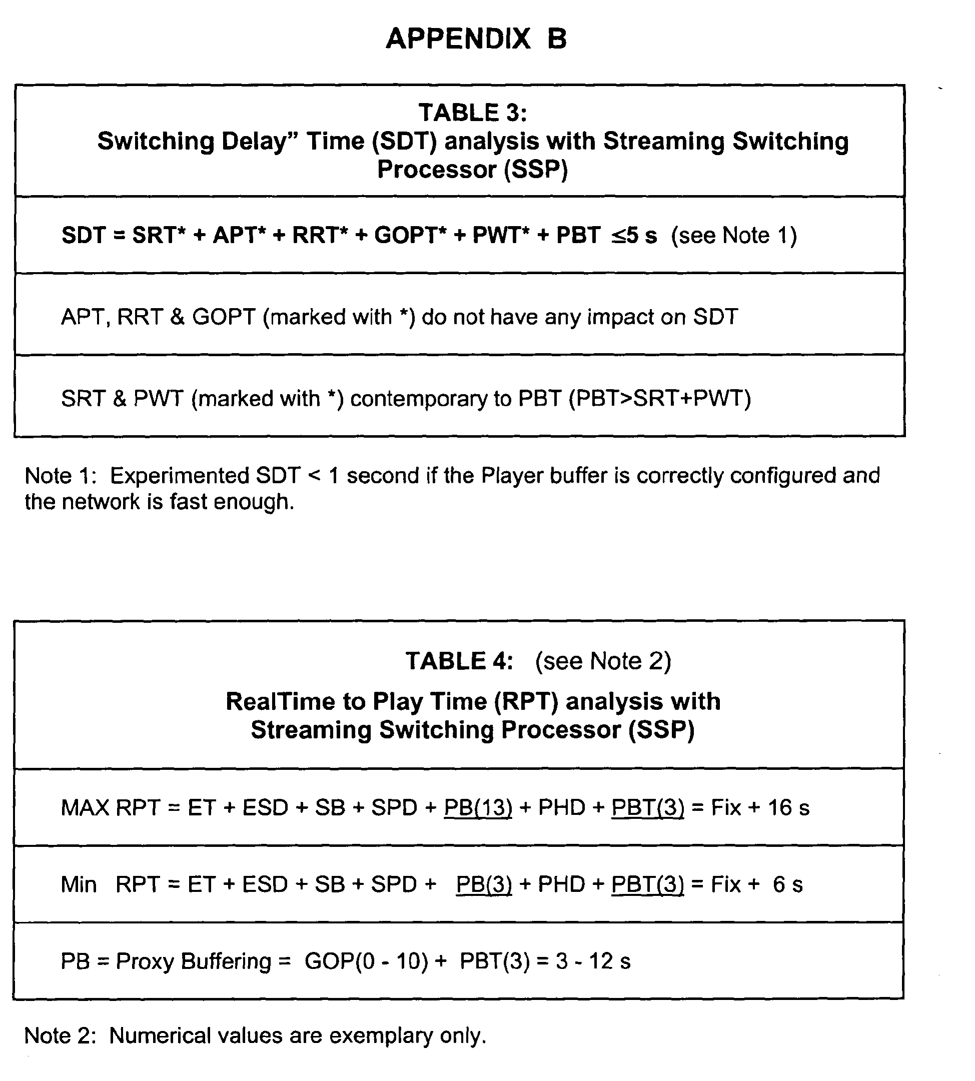

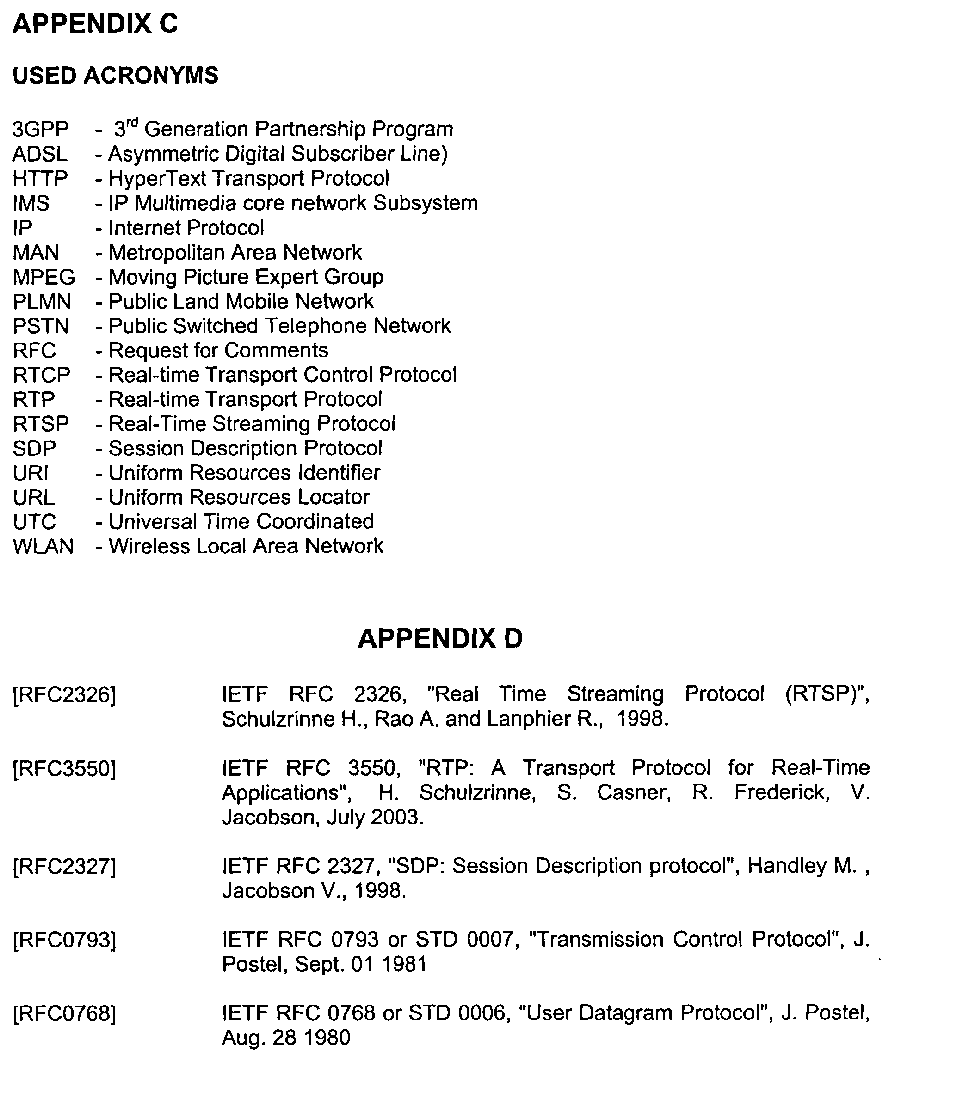

## Claims

1. Method for switching from:
- a first RTSP streaming session established between a multimedia player (MP) and a multimedia server (SSP, MS, ME) for delivering to the player (MP) first multimedia streaming contents according to the RTP/RTCP protocols, upon a switching request message (NOTIFY) sent to said multimedia server by said multimedia player,
- to a second streaming session established for delivering second multimedia streaming contents according to the RTP/RTCP protocols from said multimedia server to said multimedia player,
**characterized in that**: includes the following steps:
- coding said first and second multimedia streaming contents with equal coding rule and format and keeping them running by said multimedia server (SSP, MS, ME);
- closing said first session and establishing said second session on the basis of the information content of said switching request message (NOTIFY) in parallel to the sending of said second multimedia streaming contents to the multimedia player (MP).

2. The method of claim 1, **characterized in that** said second multimedia streaming content is selected out of M always-on coded (ME) with equal coding rule and format.

3. The method of claim 1 or 2, **characterized in that** said multimedia streaming contents are encoded real-time signals.

4. The method of any preceding claim except 3, **characterized in that** said multimedia streaming contents are pre-registered contents taken from archives.

5. The method of any preceding claim, **characterized in that** said first and second multimedia streaming contents are buffered by said multimedia server (SSP, MS, ME).

6. The method of claim 5, **characterized in that** said multimedia streaming contents are video/audio coded frames, and said multimedia player is programmed to flush the video/audio coded frames of the first multimedia streaming contents out of its receiving buffer before sending said switching request message (NOTIFY).

7. The method of claim 6, **characterized in that** the emptied space of said receiving buffer is filled up with coded frames, transferred at a transfer speed faster than the encoding speed, from the buffer of said multimedia server (SSP, MS, ME) storing said second multimedia streaming contents.

8. The method of claim 7, **characterized in that** the transfer of said coded frames is started from a Key-Frame followed by a number of frames greater than a given minimum value secure for a correct playing.

9. The method of any preceding claim, **characterized in that** said switching request message (NOTIFY) includes at least the following information fields:
- the IP address of said requesting multimedia player (MP);
- the identifier of the actual multimedia stream running on the player;
- the identifier of the requested multimedia stream;
- a switching command;
- the buffer status inside the player;
- the sequence number of the last packets received by the player.

10. The method of any preceding claim, **characterized in that** said switching request message (NOTIFY) is compliant with the RTSP protocol.

11. Communication system operating according to the method of the claim 1 including at least a multimedia player (MP) connectible to a multimedia server (SSP, MS, ME) through a transport network, both the multimedia player (MP) and the multimedia server including means arranged to set up RTSP sessions for delivering multimedia streaming contents according to the RTP/RTCP protocols from said multimedia server (MS) to said multimedia player and tear down the established sessions, and the multimedia player including means for sending a switching request message (NOTIFY) to said multimedia server in order to close an actual RTSP session and open a new RTSP session for getting multimedia contents from a new stream, **characterized in that** said multimedia server (SSP, MS, ME) includes a streaming switching processor (SSP) in its turn including:
- first means (AAB, ME) arranged for kept always running a given number M of multimedia streams coded with equal coding rules and format;
- second controllable means (SSPC) for selecting one out of M of said always running multimedia streams and forwarding the selected stream to said multimedia player (MP);
- third means (SWEL) arranged for receiving said switching request message (NOTIFY) and commanding said second means (SSPC) to select and forward the new multimedia stream in parallel to the operation of said means to tear down said actual RTSP sessions and establish said new one.

12. The system of claim 11, **characterized in that** includes M encoders arranged for encoding and duplicating said multimedia streams and transmitting the duplicated streams according to the RTP/RTCP protocol both to said streaming switching processor (SSP) and said multimedia server (MS).

13. The system of claim 12, **characterized in that** said means arranged to set up and tear down RTSP sessions are operated to only tear down said actual RTSP session.

14. The system of claim 12, **characterized in that** said means arranged to set up and tear down RTSP sessions are inactive.

15. The system of any claim from 12, **characterized in that** said streaming switching processor (SSP) includes said multimedia server (MS, ME).

16. The system of claim 15, **characterized in that** said streaming switching processor (SSP) includes said M encoders.

17. The system of any claim from 11, **characterized in that** said first means (AAB) include a given number M of buffers (LCB, PCB) for temporarily storing said multimedia streaming contents.

18. The system of claim 17, **characterized in that** said multimedia player (MP) includes a receiving buffer for temporarily storing the received multimedia streaming contents, preferably video/audio coded frames including Key-Frames, and means for flushing the video/audio coded frames out of said receiving buffer before sending said switching request message (NOTIFY).

19. The system of claim 18, **characterized in that** said second means (SSPC) for forwarding the selected stream to said multimedia player (MP) are arranged for sending said video/audio coded frames starting from a Key-Frame followed by a given minimum value of sequential frames, at a rate faster than the encoding speed.

20. The system of any preceding claim, **characterized in that** said transport network is compliant with the UMTS standardization.
